Europäisches Patentamt

European Patent Office

Office européen des brevets

(11) Veröffentlichungsnummer: **0 289 728 B1**

## (12) EUROPÄISCHE PATENTSCHRIFT

(45) Veröffentlichungstag der Patentschrift: 21.08.91

(51) Int. Cl.⁵: **D06C 3/02, B65H 29/04**

(21) Anmeldenummer: 88102933.4

(22) Anmeldetag: 26.02.88

(54) Transportkette für Warenbahn-Spannmaschinen.

(30) Priorität: 16.04.87 DE 3713063

(43) Veröffentlichungstag der Anmeldung:
09.11.88 Patentblatt 88/45

(45) Bekanntmachung des Hinweises auf die
Patenterteilung:
21.08.91 Patentblatt 91/34

(84) Benannte Vertragsstaaten:
AT DE FR GB IT

(56) Entgegenhaltungen:
DE-A- 2 657 691        DE-A- 3 333 938
DE-B- 1 221 787        DE-B- 1 303 870
DE-B- 1 635 250        DE-B- 1 925 284
GB-A- 1 165 975

(73) Patentinhaber: Brückner Trockentechnik
GmbH & Co. KG
Benzstrasse 8-10
W-7250 Leonberg(DE)

(72) Erfinder: Gresens, Harry
Max-Eyth-Strasse 33
W-7141 Benningen/Neckar(DE)

(74) Vertreter: Tetzner, Volkmar, Dr.-Ing. Dr. jur.
Van-Gogh-Strasse 3
W-8000 München 71(DE)

## Beschreibung

Die Erfindung betrifft eine Transportkette für Warenbahn-Spannmaschinen gemäß dem Obergriff des Patentanspruches 1.

Durch Warenbahn-Spannmaschinen werden vor allem Kunststoff- und textile Warenbahnen zwecks ihrer Behandlung (z.B. Trocknen und/oder Fixieren und Kühlen) in breit geführtem Zustand mit Hilfe von Transportketten hindruchgeführt, indem diese Transportketten die zu behandelnden Warenbahnen an ihren Längsrändern mittels Kluppen oder Nadelleisten festhalten.

Je nach Art und gewünschter Behandlung der Warenbahnen ist es aus der Praxis sowie z.B. auch von den Seiten 7 und 8 aus einem Prospekt der Anmelderin (BRÜCKNER SPANNMASCHINE HN) aus den Jahre 1979 allgemein bekannt, vor allem verschiedene Arten von Transportketten zu verwenden, nämlich zum einen sogenannte Gleitketten, die bevorzugt bei hohen Warengeschwindigkeiten und hohen Temperaturen und bei nur geringen Ansprüchen an Wartung und Schmierung eingesetzt werden (hierzu zählt auch die Ausführung gemäß DE-A-33 33 938), sowie zum andern sogenannte Rollenketten, die für besonders hohe Querspannkräfte seitens der Warenbahnen (z.B. bei technischen Geweben oder dgl. bevorzugt werden und an ihren Gelenkstellen Kugellager aufweisen, über deren Außenringe sie sich an Längsführungsschienen einer Kettenführung rollend abstützen und dadurch besonders gut hohe Querspannkräfte aufnehmen können. Von dieser zuletzt erwähnten Ausführungsart einer Transportkette, also den sogenannten Rollenketten, geht die vorliegende Erfindung aus.

Während bei diesen Rollenketten (vgl. die zuvor erwähnte Seite 7 im BRÜCKNER-Prospekt) auf der Außenumfangsseite der Gelenkbuchsen die erwähnten Kugellager angebracht sind, können die Innenumfangsseiten dieser Gelenkbuchsen über Gleitlagerbuchsen gelenkig auf den zugehörigen Kettengelenkbolzen abgestützt sein. Gleitlagerbuchsen innerhalb der Gelenkbuchsen bilden zusammen mit den Kettengelenkbolzen die eigentlichen Kettengelenke, während die auf den Außenumfangsseiten der Gelenkbuchsen angebrachten Kugellager sowohl der rollenden Abstützung (zur Aufnahme großer Warenbahn-Querspannkräfte) als auch der Kettenumlenkung (an den Kettenrädern) dienen. In der Praxis dieser als Rollenketten ausgebildeten Transportketten haben sich nun einige Mängel gezeigt: Die verwendeten Transportketten sollen aus Kostengründen mit normaler Fertigungspräzision hergestellt werden können. Hierdurch weichen die Kettengelenkbolzen meist von ihrer gewünschten Normallage um einige Winkelminuten ab, wodurch sich eine unerwünschte Kantenpressung in den Gleitlagerbuchsen dieser Kettengelenke ergibt, was zu vorzeitigem Verschleiß führt. Außerdem besitzen die üblicherweise verwendeten Kugellager Außenringe, die eine relativ große Elastizität haben. Die Querspannkräfte von zu behandelnden Warenbahnen führen dabei zu punktförmigen Belastungen dieser Kugellager-Außenringe, wodurch diese sich während des Betriebes bei der Krafteinleitung geringfügig etwa oval verformen, was ebenfalls unerwünscht ist.

Diese Nachteile der bekannten Ausführung können nur z.T. von einer anderen, ebenfalls bekannten Transportkette (z.B. DE-A-35 29 683) vermieden werden, wie sie im Oberbegriff des Anspruches 1 vorausgesetzt wird und in der anstelle von inneren Gleitlagerbuchsen Nadellager verwendet werden.

Der Erfindung liegt nun die Aufgabe zugrunde, unter Beseitigung der aufzeigten Mängel der bekannten Ausführungen eine Transportkette der im Oberbegriff des Anspruches 1 vorausgesetzten Art so zu verbessern, daß sie bei relativ einfacher sowie möglichst wartungsarmer und dabei wartungsfreundlicher Konstruktion besonders stabil und verschleißarm ausgeführt ist und äußerst zuverlässig läuft.

Diese Aufgabe wird erfindungsgemäß durch die Kombination mit den im Kennzeichen des Anspruches 1 angegebenen Merkmalen gelöst.

Bei den der Erfindung zugrundeliegenden Versuchen hat sich gezeigt, daß selbst Kugellager mit normal verstärkten Außenringen noch unerwünscht großen Verformungen unterworfen sind. Man könnte nun daran denken, zusätzliche Verstarkungsringe auf den Kugellager-Außenringen vorzusehen; dies bedingt jedoch eine unerwünschte Erhöhung der Fertigungskosten. Bei der erfindungsgemäßen Ausführung sieht man dagegen Kugellager vor, die nach Art eines Laufrollenlagers mit besonders verdicktem Außenring geführt sind. Derartige Kugellager-Außenringe weisen - wie bei den der Erfindung zugrundeliegenden Versuchen bestätigt werden konnte - eine ausreichende Verformungsstabilität bei den zu erwartenden großen Warenbahn-Querspannkräften auf. Da diese erfindungsgemäß verwendeten Kugellager einen im Vergleich zu normalen Kugellagern deutlich größeren Außendurchmesser besitzen (beispielsweise kann der Außendurchmesser von Außenringen vergleichbarer üblicher Kugellager etwa 40 mm betragen, während demgegenüber der Außendurchmesser der Außenringe von den erfindungsgemäß verwendeten Kugellagern etwa 47 mm betragen kann), ergibt sich durch die erfindungsgemäße Ausführung noch ein weiterer Vorteil dadurch, daß die Drehzahl des Kugellagers bei gleicher Kettengeschwindigkeit im Vergleich zu bisher verwendeten Ketten verringert wird.

Hinsichtlich einer wartungsfreundlichen Ausführung hat sich das Erfindungsmerkmal g) (Anspruch 1) als besonders vorteilhaft erwiesen. Da hierbei die äußeren Außenlaschen mit geringem Bohrungsspiel auf den zugehörigen Kettengelenkbolzen sitzen, kann die Transportkette in beliebigen oder allen Bereichen in gewünschter Weise rasch auseinandergebaut werden, indem nach einem Abschrauben der entsprechenden Tragglieder die darunter befindlichen größeren Außenlaschen frei abgehoben und danach auf die einzelnen aus je einem Innenlaschenpaar, zwei mit Abstand angeordneten Gelenkbuchsen und zwei darauf angeordneten Kugellagern bestehenden Innenlaschenglieder abgehoben werden können. Auf diese Weise sind einerseits die auf dem Kettengelenkbolzen angebrachten Nadellager vollkommen frei zugänglich (sie können ausgewaschen und gegebenenfalls neu eingefettet werden), und andererseits können auch die genannten Innenlaschenglieder und insbesondere die dazugehörigen Kugellager gereinigt und gegebenenfalls neu eingefettet werden.

Bei einer Ausführung der Transportkette, bei der jeder Kettengelenkbolzen im Bereich des Kugellagers wenigstens eine radiale erste Schmierbohrung sowie eine vom freien Ende der KettengelenkbolzenVerlängerung ausgehende und sich zumindest in den Bereich der radialen Schmierbohrung erstreckende, axiale zweite Schmierbohrung aufweist, ist ferner eine Ausbildung gemäß dem Kennzeichen des Anspruches 2 besonders vorteilhaft.

Bei den bekannten Transportkettenausführungen wird üblicherweise das obere freie Mündungsende der axialen Schmierbohrung, d.h. das Ende des Schmiermitteleintrittes, jedes Kettengelenkbolzens durch einen Hochdruck-Schmiernippel verschlossen, wobei diese axiale Schmierbohrung mit Schmiermittel gefüllt ist. Diese Schmiermittelfüllungen aller Kettengelenkbolzen einer Transportkette stellen nicht nur erhebliche Zusatzkosten dar, sondern sie unterliegen während des Kettenbetriebes auch einem erheblichen Temperaturverschleiß, und durch die hohen Umgebungstemperaturen verdampfen die Öle dieser Schmiermittel, so daß harte und nicht mehr schmierfähige Reste in den axialen Schmierbohrungen zurückbleiben. Durch die zuvor erläuterte weitere Ausgestaltung der Erfindung im Bereich des Kettengelenkbolzens (und im Bereich seiner Schmierbohrungen) können die gerade erwähnten Nachteile der bekannten Ausführungen zuverlässig vermieden werden. Bei dieser erfindungsgemäßen Ausbildung werden also anstelle der bei bekannten Transportketten üblichen. Hochdruckschmiernippel jeweils die axialen Schmierbohrungen ausfüllend Schrauben in die Kettengelenkbolzen eingesetzt. Hierdurch brauchen die axialen Schmierbohrungen der Kettengelenkbolzen nicht mehr mit Schmiermittel gefüllt zu sein. Zum Nachschmieren dieser Gelenkstellen (mit den Nadellagern und Kugellagern) brauchen dann lediglich die Schrauben entfernt zu werden, worauf frisches Schmiermittel dann bis zu den radialen Schmierbohrungen mit Nachschmiergeräten nachgefüllt werden kann; dabei kann das Schmiermittel erst im Bereich der radialen Schmierbohrungen an die Schmierstellen abgegeben werden.

Weitere vorteilhafte Ausgestaltungen der Erfindung sind Gegenstand der übrigen Unteransprüche.

Die Erfindung sei im folgenden anhand der Zeichnung näher erläutert. Es zeigen

Fig.1 einen Querschnitt durch die erfindungsgemäße Transportkette im Bereich einer Gelenkstelle sowie innerhalb einer zugehörigen Kettenführung;

Fig.2 eine zum Teil geschnittene Seitenansicht eines Innenlaschengliedes.

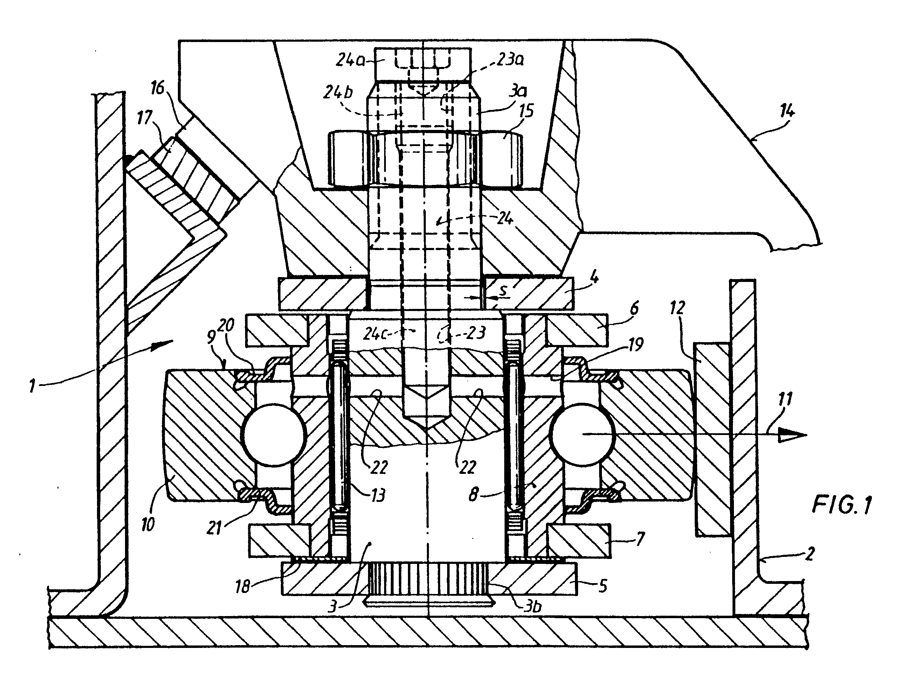

Die erfindungsgemäße Transportkette 1 ist in Fig.1 der Einfachheit halber lediglich im Querschnitt, und zwar im Bereich einer Gelenkstelle veranschaulicht. Es sei angenommen, daß diese Transportkette 1 in einer horizontalen Ebene endlos umläuft, wobei sie sich senkrecht zur Zeichenebene der Fig.1 bewegt.

Die Transportkette 1 ist in einer Kettenführung 2 in Längsrichtung durch eine an sich bekannte Warenbahn-Spannmaschine geführt, wobei die Kettenführung 2 Teil der Spannmaschine ist.

Die Transportkette 1 enthält paarweise auf Kettengelenkbolzen 3 angeordnete Außenlaschen 4, 5 sowie ebenfalls paarweise zusammengeordnete Innenlaschen 6, 7, die mit Gelenkbuchsen 8 fest verbunden sind, die sich ihrerseits auf den Kettengelenkbolzen 3 abstützen. Auf der Außenumfangsseite jeder Gelenkbuchse 8 ist ein Kugellager 9 angebracht, dessen Innenring die zugehörige Gelenkbuchse 8 bildet. Jedes Kugellager 9 ist nach Art eines Laufrollenlagers mit besonders verdicktem Außenring 10 ausgeführt, d.h. dieser Außenring 10 hat gegenüber einem vergleichbaren normalen Kugellager eine besonders große radiale Dicke und dadurch einen relativ großen Außendurchmesser. Auf diese Weise ist der Kugellager-Außenring 10 verhältnismäßig formstabil, selbst bei verhältnismäßig großen radialen Querspannkräften, die in Fig.1 durch Pfeil 11 angedeutet sind und während des Betriebes der zugehörigen Spannmaschine von einer zu behandelnden Warenbahn ausgeht, wenn die Transportkette 1 sich über die Kugellager 9 und deren Außenringe 10 an einer auf der Seite der - nicht dargestellten - Warenbahn befindlichen Längsführungsschiene 12 der Kettenführung 2 rollend abstützt.

Im Bereich jeder Kettengelenkstelle (Fig.1) ist zwischen jeder Gelenkbuchse 8 und dem zugehörigen Kettengelenkbolzen 3 - im veranschaulichten Ausführungsbeispiel - ein Nadellager 13 vorgesehen, das direkt auf der Außenumfangsseite dieses Kettengelenkbolzens 3 fest angebracht ist. Im Bedarfsfalle, d.h. insbesondere bei größeren Kettenausführungen, könnten selbstverständlich auch zwei solcher Nadellager axial hintereinander auf dem Kettengelenkbolzen 3 angeordnet sein.

Die Kettengelenkbolzen 3 weisen an ihren einen Enden eine Bolzenverlängerung 3a auf, die über die obere, äußere Außenlasche 4 des zugehörigen Außenlaschenpaares nach oben, außen vorsteht und mit Außengewinde versehen ist. Diese Bolzenverlängerungen 3a dienen zur Aufnahme von üblichen Traggliedern 14 für Kluppen oder Nadelleisten zum Festhalten der Längsränder von zu behandelnden Warenbahnen. Diese Tragglieder 14 sind auf den oberen, äußeren Außenlaschen 4 der entsprechenden Außenlaschenpaare (4, 5) angeordnet und mit Hilfe einer auf die Bolzenverlängerung 3a aufgeschraubten Schraubenmutter 15 lösbar befestigt. Die Tragglieder 14 können ferner zumindest auf ihrer der Warenbahn abgewandten Rückseite ein Gleitelement 16 aufweisen, mit dem sie sich zusätzlich gleitbeweglich an einer Gleitführungsschiene 17 der Kettenführung 2 abstützen.

Bei der vorliegenden Ausführungsform der Transportkette 1 sitzen die äußeren Außenlaschen 4, auf denen die Tragglieder 14 angeordnet sind, mit geringem Bohrungsspiel s in der in Fig.1 dargestellten Weise auf den Kettengelenkbolzen 3. Dagegen sind die gegenüberliegenden inneren Außenlaschen 5 jedes Außenlaschenpaares fest mit dem inneren Ende 3b des zugehörigen Kettengelenkbolzens 3 verbunden (beispielsweise durch Preßsitz). Zwischen den inneren Außenlaschen 5 und den unteren Enden der Gelenkbuchsen 8 bzw. den hier befindlichen Innenlaschen 7 kann ferner in an sich bekannter Weise ein dünnes Folienlager 18 vorgesehen sein.

Die Gelenkbuchsen 8, die die Innenringe der Kugellager 9 bilden, weisen im dargestellten Ausführungsbeispiel zwei sich etwa diametral gegenüberliegende, radiale Querbohrungen (Durchgangsbohrungen) 19 auf, die - wie in Fig.1 zu erkennen - mit Abstand oberhalb und neben der Kugellaufbahn ausmünden. Diese Querbohrungen 19 dienen zum Einbringen eines Dauerschmiermittels in den Bereich der Kugellaufbahn dieser Kugellager 9 sowie zu den Nadellagern 13.

Die beiden axialen Enden der Kugellager 9 sind durch geeignete Ringdichtungen 20 bzw. 21 schmiermitteldicht abgeschlossen.

Jeder Kettengelenkbolzen 3 weist im Bereich des Kugellagers 9 wenigstens eine - im Falle der Fig. 1 zwei - radiale erste Schmierbohrung 22 auf, wobei diese ersten radialen Schmierbohrungen 22 auf derselben Höhe wie die Querbohrungen 19 jeder Gelenkbuchse 8 liegen. Ferner besitzt jeder Kettengelenkbolzen 3 eine vom freien Ende seiner Verlängerung 3a ausgehende und sich zumindest bis in den Bereichen der radialen Schmierbohrungen 22 erstreckende, axiale zweite Schmierbohrung 23. Diese axiale zweite Schmierbohrung 23 besitzt nur in der Nähe ihres - in Fig. 1 oberen - freien Mündungsendes ein relativ kurzes Innengewinde 23a. In dieses Innengewinde 23a ist eine Schraube (Füllschraube) 24 eingeschraubt, die nur in der Nähe ihres Kopfes 24a, der sich am freien Stirnende des Kettengelenkbolzens 3 abstützt, ein dem Innengewinde 23a angepaßtes Außengewinde 24b aufweist. Diese Schraube 24 besitzt ferner einen sich an das Außengewinde 24b anschließenden, im wesentlichen zylindrischen Schraubenschaft 24c, der mit seinem freien Ende etwa bis zu den radialen ersten Schmierbohrungen 22 reicht (vgl. Fig. 1), wobei der Außendurchmesser dieses Schraubenschaftes 24c etwa in Form eines Gleitsitzes dem Innendurchmesser des übrigen, zylindrischen Schmierbohrungsabschnittes der axialen Schmierbohrung 23 angepaßt ist. Im eingeschraubten Zustand (Fig. 1) füllt somit die Schraube 24 die axiale zweite Schmierbohrung 23 bis in den Bereich der radialen ersten Schmierbohrungen 22 aus. Der Kopf 24a der Schraube 24 kann in geeigneter Weise ausgebildet sein, beispielsweise mit Außensechskant oder - gemäß Fig.1 -mit Innensechskant.

Wenn bei dieser Ausführungsform die Kugellager 9 und Nadellager 13 an den Kettengelenkstellen nachgeschmiert werden müssen, dann braucht lediglich die Füllschraube 24 herausgeschraubt zu werden, worauf dann in die axiale zweite Schmierbohrung 23 das Schmierrohr eines geeigneten Nachschmiergerätes etwa bis in den Bereich der radialen ersten Schmierbohrungen 22 eingeführt werden kann. Nach dem Nachschmieren werden dann die Füllschrauben 24 wieder eingeschraubt, so daß in den axialen zweiten Schmierbohrungen 23 kein Schmiermittel verbleibt, wodurch sich eine äußerst wirtschaftliche, zweckmäßige Schmierung der Kugel- und Nadellager 9 bzw. 13 ergibt.

Die Kettengelenkbolzen 3 der Transportkette 1 können alternativ jedoch auch schmierbohrungsfrei ausgeführt werden, d. h. im Gegensatz zu der zuvor geschilderten Ausführung besitzen sie dann keinerlei axiale und radiale Schmierbohrungen. In diesem Falle können die Kugellager 9 und die Nadellager 13 dann mit Dauerfettschmierungen bzw. entsprechenden Fettvorräten versehen werden, die dann lediglich zu den von Zeit zu Zeit erforderlich werdenden Wartungsintervallen erneuert werden können.

Bei dieser Alternativausführung der Kettengelenkbolzen werden dann bei den Wartungsarbeiten (nach einem Reinigen der Lager) die Kugellager 9 und Nadellager 13 mit ausreichenden, genau bemessenen Schmiermittelvorräten versehen, die durch die geeigneten Nachschmiereinrichtungen in die Lager eingebracht werden können. Die Vorteile dieser Alternativausführung liegen in der vereinfachten Herstellung der Kettengelenkbolzen.

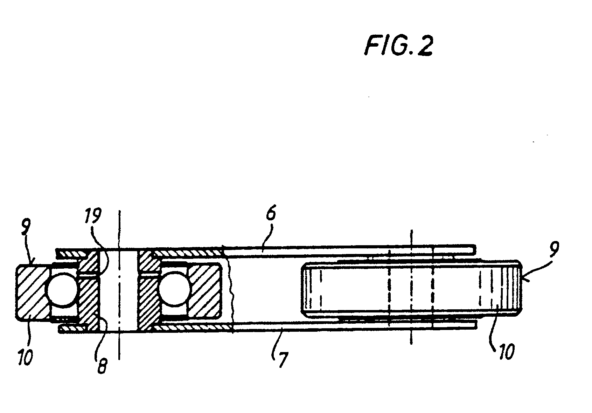

Zum Gesamtaufbau der Transportkette 1 sei noch erwähnt, daß diese Kette eine Vielzahl von als einzelne Einheiten ausgebildeten Innenlaschengliedern enthält, die je im wesentlichen aus einem Innenlaschenpaar (6, 7), zwei mit Abstand angeordneten Gelenkbuchsen 8 und zwei darauf angeordneten Kugellagern 9 bestehen, wie es in Fig. 2 anhand eines Innenlaschengliedes veranschaulicht ist. Je zwei mit Abstand voneinander angeordnete, benachbarte Innenlaschenglieder gemäß Fig. 2 werden an ihren gegeneinander weisenden Enden durch ein sie übergreifendes Außenlaschenpaar (4, 5) und zwei Kettengelenkbolzen 3 miteinander verbunden, so daß sich an jeder Gelenkstelle die in Fig. 1 im Schnitt dargestellte Zusammenordnung ergibt.

Wenn diese Transportkette 1 zu Wartungszwecken auseinandergebaut werden soll, dann werden zunächst die Schraubenmutterrn 15 gelöst, damit die Tragglieder 14 abgenommen werden können (wobei die Köpfe 24a der eingeschraubten Schrauben 24 diesen Vorgang nicht behindern). Danach liegen die oberen,äußeren Außenlaschen 4 frei, so daß sie aufgrund ihres Bohrungsspieles s frei nach oben von den Kettengelenkbolzen 3 abgehoben werden können. Hierdurch sind die zuvor erläuterten Innenlaschenglieder (Fig. 2) freigegeben, so daß sie ebenfalls nach oben von den Kettengelenkbolzen 3, den darauf befindlichen Nadellagern 13 und den darunter liegenden inneren Außenlaschen 5 abgehoben werden. Nun liegen die Nadellager 13 völlig frei, so daß sie ausgewaschen und neu gefettet werden können. Unabhängig davon können die genannten Innenlaschenglieder einschließlich ihrer beiden Kugellager 9 beispielsweise in einer Ultraschall-Waschmaschine gereinigt und dadurch von alten Fettresten befreit werden. Hierauf bzw. nach erneutem Zusammenbau können die gereinigten Kugellager 9 dann ebenfalls eine neue Dauerfettfüllung halten.

Bei dieser erfindungsgemäßen Ausführung können die Wartungs-Stillstandszeiten für die Transportketten einer Warenbahn-Spannmaschine äußerst klein gehalten werden. Diese kurzen Stillstandszeiten konnen dann noch weiter verringert werden, wenn Ersatz-Innenlaschenglieder zur Verfügung stehen, die bei den jeweils erforderlich werdenden Wartungen der Spannmaschine bzw. der Transportketten in der oben erläuterten Weise einfach ausgetauscht werden. Die herausgenommenen Innenlaschenglieder können dann zu einem Zeitpunkt gereinigt und für einen erneuten Einbau in die Transportkette vorbereitet werden, wenn die Spannmaschine bereits wieder arbeitet.

**Patentansprüche**

1. Transportkette für Warenbahn-Spannmaschinen, enthaltend
   a) paarweise auf Kettengelenkbolzen (3) angeordnete Außenlaschen (4, 5),
   b) paarweise zusammengeordnete Innenlaschen (6, 7), die mit auf den Kettengelenkbolzen gelagerten Gelenkbuchsen (8) fest verbunden sind,
   c) auf der Außenumfangsseite der Gelenkbuchsen (8) angebrachte Kugellager (9), deren Außenring (10) sich zur Aufnahme von großen Warenbahn-Querspannkräften (11) an einer Längsführungsschiene (12) einer Kettenführung (2) rollend abstützt,
   d) wenigstens ein zwischen jeder Gelenkbuchse (8) und dem zugehörigen Kettengelenkbolzen (3) direkt auf der Außenumfangsseite dieses Kettengelenkbolzens angebrachtes Nadellager (13),
   e) zum Anbringen von Kluppen oder Nadelleisten bestimmte Tragglieder (14), die auf den äußeren Außenlaschen (4) von Außenlaschenpaaren angeordnet und durch Schraubenmuttern (15) auf nach außen vorstehenden Verlängerungen (3a) der Kettengelenkbolzen (3) befestigt sind,
   gekennzeichnet durch die Kombination mit folgenden Merkmalen:
   f) Die Kugellager (9) sind nach Art eines Laufrollenlagers mit besonders verdickten Außenringen (10) ausgeführt;
   g) die äußeren Außenlaschen (4), auf denen die Tragglieder (14) angeordnet sind, sitzen mit geringem Bohrungsspiel (s) auf den Kettengelenkbolzen (3), während die gegenüberliegenden inneren Außenlaschen (5) jedes Außenlaschenpaares fest mit dem inneren Ende (3b) des zugehörigen Kettengelenkbolzens verbunden sind.

2. Transportkette nach Anspruch 1, wobei jeder Kettengelenkbolzen (3) im Bereich des Kugellagers (9) wenigstens eine radiale erste Schmierbohrung (22) sowie eine vom freien Ende der Kettengelenkbolzen-Verlängerung ausgehende und sich zumindest bis in den Bereich der radialen Schmierbohrung erstreckende, axiale zweite Schmierbohrung aufweist, dadurch gekennzeichnet, daß die den Innenring jedes Kugellagers (9) bildenden Gelenkbuchsen (8) in der Höhe der radialen ersten Schmierbohrung (22) des Kettengelenkbolzens (3) wenigstens eine neben der Kugellaufbahn ausmündende, radiale Querbohrung (19) aufweisen und daß eine etwa bis zur radialen ersten Schmierbohrung (22) reichende Schraube (24) in die axiale zweite Schmierbohrung (23) eingeschraubt ist.

3. Transportkette nach Anspruch 2, dadurch gekennzeichnet, daß die axiale zweite Schmierbohrung (23) nur in der Nähe ihres freien Mündungsendes ein Innengewinde (23a) besitzt und die Schraube (24) nur in der Nähe ihres Kopfes (24a) ein dem Innengewinde angepaßtes Außengewinde (24b) aufweist, während der übrige Schraubenschaft (24c) zylindrisch ausgeführt und dem Durchmesser des übrigen, zylindrischen Schmierbohrungsabschnittes angepaßt ist und diesen ausfüllt.

4. Transportkette nach Anspruch 1, dadurch gekennzeichnet, daß die Kettengelenkbolzen schmierbohrungsfrei ausgeführt sind und die den Innenring jedes Kugellagers bildenden Gelenkbuchsen wenigstens eine neben der Kugellaufbahn ausmündende, radiale Querbohrung aufweisen.

5. Transportkette nach Anspruch 1, dadurch gekennzeichnet, daß die Kette (1) über an den Traggliedern (14) angebrachte Gleitelemente (16) zusätzlich an den Gleitführungsschienen (17) der Kettenführung (2) abgestützt ist.

## Claims

1. Conveyor chain for machines for tensioning lengths of material, containing
   a) outer fishplates (4, 5) arranged in pairs on chain joint bolts (3),
   b) inner fishplates (6, 7) which are combined in pairs and firmly connected to joint sleeves (8) mounted on the chain joint bolts,
   c) ball bearings (9) which are provided on the outer peripheral surface of the joint sleeves (8), the outer race (10) thereof being supported in a rolling manner on a longitudinal guide rail (12) of a chain guide (2) to take up high transverse tensional forces (11) in the length of material,
   d) at least one needle bearing (13) provided directly on the outer peripheral surface of the chain joint bolt (3) between each joint sleeve (8) and the appertaining chain joint bolt,
   e) support members (14) which are intended for mounting of grippers or needle plates, are arranged on the outermost outer fishplates (4) of pairs of outer fishplates and fixed by screw nuts (15) on outwardly projecting extensions (3a) of the chain joint bolts (3),
characterised by the combination with the following features:
   f) the ball bearings (9) are constructed like roller bearings with particularly thickened outer races (10),
   g) the outermost outer fishplates (4) on which the support members (14) are arranged rest with a small bore clearance (s) on the chain joint bolts (3), whilst the opposing innermost outer fishplates (5) of each pair of outer fishplates are firmly connected to the inner end (3b) of the appertaining chain joint bolt.

2. Conveyor chain as claimed in claim 1, in which each chain joint bolt (3) has in the region of the ball bearing (9) at least one radial first lubrication bore (22) as well as an axial second lubrication bore which starts from the free end of the chain joint bolt extension and extends at least as far as the region of the radial lubrication bore, characterised in that the joint sleeves (8) which form the inner race of each ball bearing (9) have at the height of the radial first lubrication bore (22) of the chain joint bolt (3) at least one radial transverse bore (19) which opens adjacent to the ball race, and a screw (24) which reaches approximately as far as the radial first lubrication bore (22) is screwed into the axial second lubrication bore (23).

3. Conveyor chain as claimed in claim 2, characterised in that the axial second lubrication bore (23) has an internal thread (23a) only in the proximity of its free opening end and the screw (24) has an external thread (24b) adapted to the internal thread only in the proximity of its head (24a), whilst the rest of the screw shank (24c) is of cylindrical construction, adapted to the diameter of the remaining cylindrical section of the lubrication bore and fills the latter.

4. Conveyor chain as claimed in claim 1, characterised in that the chain joint bolts are constructed without lubrication bores and the joint sleeves forming the inner race of each ball bearing have at least one radial transverse bore which opens adjacent to the ball race.

5. Conveyor chain as claimed in claim 1, characterised in that the chain (1) is additionally supported on the sliding guide rails (17) of the chain guide (2) by slide elements (16) mounted on the support members (14).

## Revendications

1. Chaîne de transport pour rameuses de nappes continue de produit, comprenant

   a) des maillons extérieurs (4, 5) disposés par paires sur des tourillons d'articulation (3)

   b) des maillons intérieurs (6, 7) assemblés par paires et solidarisés avec des manchons d'articulation (8) montés sur les tourillons,

   c) des roulements à billes (9) montés sur le côté circonférenciel extérieur des manchons d'articulation (8) et dont la bague extérieure (10) prend appui à roulement contre une barre longitudinale (12) d'un guide-chaîne (2) afin d'absorber les grandes forces transversales de traction (11) exercées par la nappe continue de produit,

   d) au moins un roulement à aiguilles (13) monté directement sur le côté circonférenciel extérieur du tourillon d'articulation (3), entre chaque manchon d'articulation (8) et ce tourillon correspondant,

   e) des organes de support (14) destinés au montage de pinces ou de plaquettes à picots et qui sont disposés sur les maillons extérieurs (4), situés du côté extérieur, de paires de maillons extérieurs, ces supports étant fixés par des écrous (15) sur des prolongements (3a) des tourillons d'articulation (3) qui ressortent vers l'extérieur,

   caractérisée par la combinaison des particularités suivantes :

   f) les roulements à billes (9) sont réalisés à la manière d'un galet de roulement avec des bagues extérieurs (10) particulièrement épaisses ;

   g) les maillons extérieurs (4), situés du côté extérieur et sur lesquels les organes de transport (14) sont disposés, reposent sur les tourillons d'articulation (3) avec un faible jeu (s) d'alésage, tandis que les maillons extérieurs (5), qui sont situés du côté opposé intérieur, de chaque paire de maillons correspondants sont fixés sur l'extrémité intérieure (3b) du tourillon d'articulation correspondant.

2. Chaîne de transport selon la revendication 1, dans laquelle chaque tourillon d'articulation (3) comprend, au voisinage du roulement à billes (9), au moins un premier trou radial de lubrification (22) ainsi qu'un second trou axial de lubrification partant de l'extrémité libre du prolongement du tourillon d'articulation et se prolongeant au moins jusque dans le trou radial de lubrification, caractérisee en ce que les manchons d'articulation (8) qui forment la bague intérieure de chaque roulement à billes (9) comportent, au niveau de premier trou radial de lubrification (22) du tourillon d'articulation (3), au moins un trou transversal radial (19) débouchant à côté de la voie de roulement des billes et en ce qu'une vis (24) atteignant approximativement le premier trou radial de lubrification (22) est montée dans le second trou axial de lubrification (23).

3. Chaîne de transport selon la revendication 2, caractérisée en ce que le seecond trou axial de lubrification (23) comporte un taraudage (23a) uniquement à promimité de l'extrémité libre de son embouchure et la vis (24) comporte un filetage (24b) correspondant au taraudage uniquement au voisinage de la tête (24a) tandis que le reste de la tige (24c) de la vis est cylindrique et ajusté au diamètre de la partie cylindrique restante du trou de lubrification et emplit ce dernier.

4. Chaîne de transport selon la revendication 1, caractérisée en ce que les tourillons d'articulation ne comportent aucun trou de lubrification et les manchons d'articulation formant la bague intérieure de chaque roulement à billes comportent au moins un trou transversal radial qui débouche à côté de la voie de roulement des billes.

5. Chaîne de transport selon la revendication 1, caractérisée en ce que la chaîne (1) prend appui accessoirement contre les barres de glissement (17) du guide-chaîne (2) au moyen d'éléments de glissements (16) placés sur les organes de support (14).

FIG.1

## FIG.2